# EUROPEAN PATENT APPLICATION

(11) **EP 1 613 084 A2**
(43) Date of publication of application: **04.01.2006**
(21) Application number: 05105304.9
(22) Date of filing: 16.06.2005
(51) Int. Cl.: H04N 7/14

(54) **AV system and control unit**

(30) Priority: 29.06.2004 FI 20045252
(71) Applicant: Videra Oy, 90530 Oulu (FI)
(72) Inventor: Ojala, Markku, 90100, Oulu (FI)
(74) Representative: Holmström, Stefan Mikael

(57) **Abstract**

The present invention relates to an AV system comprising a control unit (2) for generating an AV signal to be transmitted on the basis of signals produced by AV sources (5 to 10, 12). So as to be able to select the correct AV source automatically, the system comprises a camera (1). The control unit (2) contains a memory (16) having information stored therein that indicate areas (A to D) covered by the AV sources (5 to 10, 12) in an image (4), and an image processing apparatus (3) for locating the user in the image and for identifying the AV source in whose area the user is. The control unit (2) is arranged to generate the AV signal (13) to be transmitted by utilizing an AV signal produced by the identified AV source and/or a signal of an AV source, for which the control unit (2) receives a control impulse that indicates that the user has selected the AV source in question for use.

## Description

### FIELD OF THE INVENTION

The present invention relates to an AV (Audio Video) system and especially to controlling such a system in such a manner that it is possible to select for use a desired signal from signals originating from several optional AV sources. In this application, the concept AV source should be understood widely to cover all technical devices capable of producing image or sound signals, such as cameras, microphones, image recorders (e.g. videos, DVD players), sound recorders (e.g. tape recorders, CD players), and computers.

### DESCRIPTION OF THE PRIOR ART

An AV system is previously known, in which the user has a control unit having switches for different AV sources arranged thereto, whereby, by pressing a correct switch, the user can define that the signal of the AV source in question will be used from that moment onward. The selected AV source will then remain in use until the user again presses a switch to select the signal of some other AV source for use.

The most significant weakness in the AV system described above is that it is not very user-friendly. For instance, during a videoconference or lecture, the user typically repeatedly utilizes several different AV sources, whereby, in practice, the user very often needs to manually find the correct switch from the control unit and press it so as to use the signal of the correct AV source from that moment on. In practice, this disturbs the concentration of the user on the content of the actual conference or lecture, and there may also be "breaks" in the conference or lecture, during which the user searches for the correct switch.

### SUMMARY OF THE INVENTION

It is an object of the present invention to solve the problem described above and to provide a solution that improves the user-friendliness of an AV system. This object is achieved with an AV system according to independent claim 1 and a control unit according to independent claim 8.

The present invention utilizes images produced by one or more cameras and an image-processing apparatus for locating a performer in a space. The AV system selects the AV source to be used on the basis of the images produced by a camera or cameras.

When the location of the user is defined, it is possible to detect on the basis of information stored in a memory, which AV source covers the area where the user is. After this, the signal produced by the AV source in question is utilized in the control unit to generate an AV signal. However, the user also has the option of triggering control impulses, with which he can instruct the control unit to utilize the signal of a specific AV source in generating the AV signal to be transmitted. For this purpose, the site of the AV sources, the AV sources, the control unit, or the area close to the AV sources may have sensors or switches for triggering the control impulses.

The most significant advantage of the solution of the invention is an improved user-friendliness, because at best the generation of an AV signal to be transmitted takes place fully automatically in such a manner that the user need not at all take action and can fully concentrate on the videoconference or lecture, for instance, and the correct AV signal sources continue to be automatically selected.

Preferred embodiments of the AV system of the invention are disclosed in the attached dependent claims 2 to 7.

### BRIEF DESCRIPTION OF THE FIGURES

In the following, the invention will be described by way of example in greater detail with reference to the attached drawings, in which
Figure 1 is a block diagram of a first preferred embodiment of the invention, and
Figure 2 illustrates the programming of the control unit of Figure 1 and the automatic selection of the AV sources to be used.

### DESCRIPTION OF THE PREFERRED EMBODIMENTS

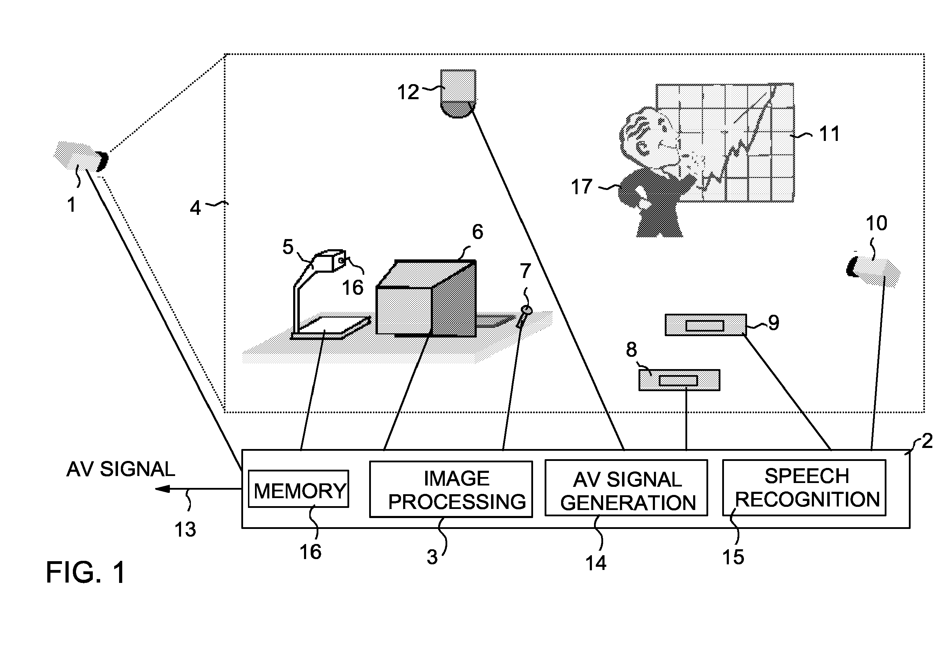

Figure 1 is a block diagram of a first preferred embodiment of the AV system and control unit of the invention. The following description assumes by way of example that it is a part of a videoconference system that is arranged to transmit to other parties of a videoconference an AV signal generated and supplied by the control unit, or alternatively, that it is an AV system of an auditorium for producing images and/or sounds for presentation to the persons in the auditorium on the basis of an AV signal generated and supplied by the control unit. In this context, the concept auditorium should be understood widely to cover all such sites having an AV system installed therein to produce images and/or sounds to the persons at the site for instance by feeding a generated AV signal to loudspeakers and/or through a wide screen television projector to a screen.

The system of Figure 1 comprises a camera 1 that films a space where AV sources are located. In practice, the camera 1 thus produces a signal that it transmits to a control unit 2, and an image-processing unit 3 of the control unit then receives an image 4 defined by dashed lines.

The system comprises at least two AV sources. However, in the case of Figure 1, there are several AV sources. The AV sources shown by way of example in Figure 1 are:
- A document camera 5 for producing images of a paper document set in the image field of the camera
- A computer 6, graphics and text displayed on its display can be transformed into AV signals. Sound signals generated with the computer can also be transformed into AV signals
- A microphone 7, sound signals received by it can be transformed into AV signals
- An image reproduction device 8, such as a video or DVD player, the image and/or sound signals of which can be transformed into AV signals
- Sound reproducing equipment 9, such as a cassette player, radio, or CD player, the sound signals of which can be transformed into AV signals
- A camera 10 focused on a board 11, the image of which can be transformed into AV signals that contain the matters presented on the board 11
- A directional camera 12 which, using control signals from the control unit 2, can be directed to a desired target and the image signals of which can be transformed into AV signals.

The above-mentioned AV sources are connected to the control unit 2 that on the basis of the AV signals received from the AV sources generates in an AV signal generation unit 14 an AV signal 13 to be transmitted. The AV signal 13 to be transmitted may originate from only one AV source, in which case the control just selects the AV signal to be transmitted, or alternatively, the AV signal to be transmitted may be generated by combining signal components from AV signals received from different AV sources. In such a case, for instance the sound signal and image signal of the AC signal 13 to be transmitted may originate from different AV sources. The AV signal to be transmitted may also contain several image signals from different AV sources in such a manner, for instance, that each image signal is shown in a separate window.

In the case of Figure 1, the control unit 2 comprises a speech recognition unit 15. The user can then trigger a control impulse with sound signals by speaking into the microphone 7. In practice, the user can for instance mention the AV source whose AV signal the control unit should next utilize in generating the AV signal 13 to be transmitted. The speech recognition unit 15 then recognizes the sound command of the user and indicates the correct AV source to the AV signal generation unit 14.

In the case of Figure 1, the space in which the AV sources are also contains switches or sensors through which the user may manually trigger a control impulse to indicate to the control unit 2 that the user has selected a specific AV source for use. In the case of Figure 1, such a switch 16 is shown in connection with the document camera 5, for instance. The sensors to be used may for instance be pressure sensors (sensor mats) arranged on the floor, and when stepping on it, the user triggers a control impulse to the control unit 2 to indicate that the AV source closest to the sensor should be taken into use. Further, the AV sources may at activation automatically transmit to the control unit 2 control impulses that indicate that the user has selected a specific AV source for use. Thus, for instance, when the user manually activates the image reproduction device 8, the control unit 2 detects that the image reproduction device transmits image signals, and the control unit identifies this as the above-mentioned control impulse that indicates that the AV signal produced by the image reproduction device should be utilized from then on. Alternatively, moving a document in front of a document camera may trigger a control impulse that indicates that the AV signal produced by the document camera should be utilized from then on.

The control unit 2 also contains a memory 16 with information stored therein indicating the areas covered by the AV sources in the image 4 produced by the camera 1. This allows the control unit 2 to automatically select suitable AV sources for use on the basis of the location of the user 17.

Figure 1 shows by way of example that the control unit is a one-part unit, but in practice, the control unit can also be distributed, in which case the different parts of the control unit are integrated to the AV sources, for instance, or alternatively encapsulated as separate units. In practice, the control unit can be implemented with circuit solutions, computer programs, or a combination thereof. The control unit may be a computer with a computer program. The structure of the control unit may also vary so that the blocks shown in Figure 1 are implemented as shown or, alternatively, so that the functions of two or more blocks are integrated together.

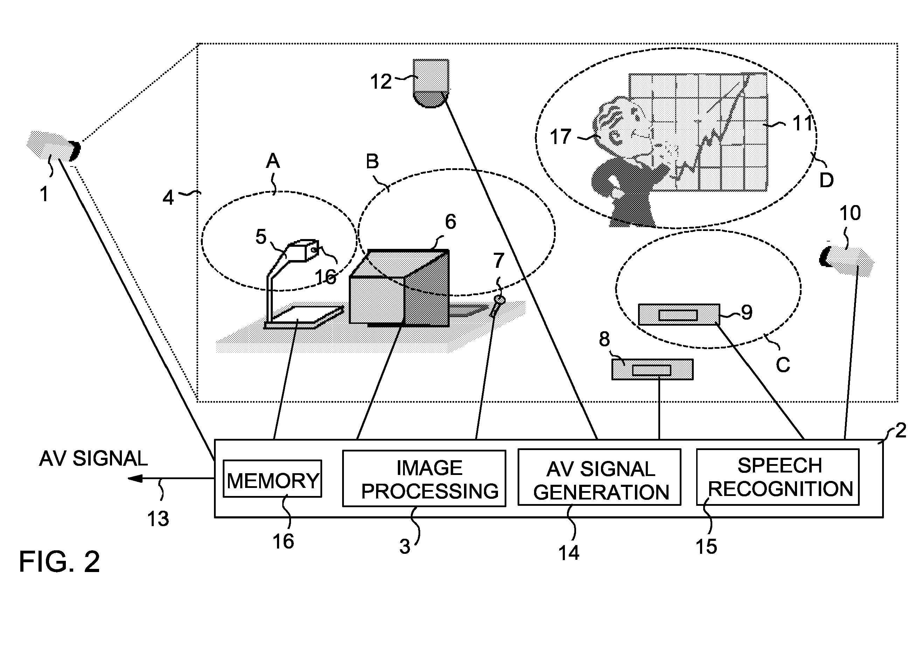

Figure 2 illustrates the programming of the memory 16 of the control unit of Figure 1 and the automatic selection of the AV sources to be used.

When the AV system shown in Figure 2 is installed for use at a new site, or AV sources are added or removed from a site, the information stored in the memory 16 of the control unit 2 shall be updated so that the control unit can take the necessary action for the selection of the correct AV source. In Figure 2, it is assumed by way of example that the system has a graphical user interface through which the programming can be done. The user interface then shows the image 4 produced by the camera 1. Next, the user defines areas for the different AV sources on the display of the user interface. In the case of Figure 2, the document camera 5 has area A, the computer 6 has area B, the sound reproducing equipment 9 has area C, and the camera 10 filming the board 11 has area D. The memory 16 then stores the information according to which the AV signal produced by the document camera 5 shall be taken into use if the image processing apparatus 3 detects that the user 17 is in area A. However, if the user is in area B, the AV signal produced by the computer 6 shall be selected for use. If the user is in area C, the AV signal produced by the sound reproducing equipment 9 shall be selected for use. Correspondingly, if the user is in area D, the AV signal produced by the camera 10 shall be selected for use.

Thus, by moving to the area covered by the desired AV source, the user can automatically take the device in question into use. This is a very user-friendly solution, because the user can then concentrate entirely on the videoconference or lecture without needing to take care of selecting the correct AV source. However, as described in connection with Figure 1, the user can, as necessary, manually trigger control impulses with sound signals, switches, or sensors to activate an AV source further away from him without needing to move close to the AV source in question.

Locating the user 17 in the image 4 can be done utilizing image processing techniques known per se. One alternative is to identify the movement of the user, which, in practice, has proven a very effective alternative in situations in which lighting conditions vary. Other alternatives are finding the face of the user in the image on the basis of the colour of the face, and background distinction, i.e. the detection of the static background in the image, and the identification of the objects moving thereon by comparing them with the background images. In addition to locating the user, the invention also comprises utilizing other information concerning the user in the selection of the AV source. One option is to analyze the direction of the user's eyes by locating the user's eyes and nose, and determining from them what the user is looking at, and then directing the camera 12 to this target. Further, the movements of the user can also be predicted in such a manner that the control of the AV sources utilizes an estimate on which of the AV sources the user is about to move to. So as to avoid unnecessarily many continuous changes in the AV signal being transmitted, the control unit 2 can be configured to utilize for instance a delay of specific length after the user's movement is detected, before the signal of a new AV source is taken into use.

According to the invention, the control unit may learn, i.e. it stores into memory the movements of the user, often-repeated situations, and the related selection of AV sources, and later utilizes the information stored in the memory when selecting for use signals produced by the AV sources. In practice, this can be implemented by using an SOM (Self Organizing Map) database, for instance.

It is to be understood that the above description and the related figures are only intended to illustrate the present invention. Various variations and modifications of the invention will be apparent to a person skilled in the art, without departing from the scope of the invention.

## Claims

1. An AV system comprising:
at least two AV sources (5 to 10, 12) for producing AV signals, and
a control unit (2) for generating an AV signal to be transmitted on the basis of signals produced by the AV sources and for transmitting the generated AV signal (13), **characterized in that**
the system further contains at least one camera (1) arranged to film a space where the AV sources (5 to 10, 12) are located,
the control unit (2) contains a memory (16), in which information is stored indicating areas (A to D) covered by the AV sources (5 to 10, 12) in the image (4) produced by the camera, and an image processing apparatus (3) arranged to process an image produced by the at least one camera to locate a user in the image and to identify an AV source (5 to 10, 12) that covers the area where the user is on the basis of the location of the user and the information stored in the memory, and
the control unit (2) is arranged to generate the AV signal (13) to be transmitted by utilizing the AV signal produced by the identified AV source and/or the signal of an AV source, for which the control unit (2) receives a control impulse indicating that the user selected the AV source for use.

2. An AV system as claimed in claim 1, **characterized in that** the at least two AV sources include one or more of the following: camera (12), microphone (7), document camera (5), computer (6), image reproduction device (8), and sound reproducing device (9).

3. An AV system as claimed in claim 1 or 2, **characterized in that** in the space, where the AV sources are located, switches (16) or sensors are arranged for the user to trigger a control impulse that indicates that the user has selected a specific AV source (5) for use.

4. An AV system as claimed in any one of claims 1 to 3, **characterized in that** one or more AV sources (5 to 9) are arranged to produce a control impulse that indicates that the user has selected an AV source for use when the user has manually activated the AV source.

5. An AV system as claimed in any one of claims 1 to 4, **characterized in that** the system includes a microphone (7) and a speech recognition unit (15) that is arranged to process sound signals received through the microphone and to identify a sound command given by the user on the basis of the processing and to produce on the basis of the identified sound command a control impulse that indicates that the user has selected a specific AV source (5 to 10, 12) for use.

6. An AV system as claimed in any one of claims 1 to 5, **characterized in that** the AV system is a part of a videoconference system that is arranged to transmit to other parties of a videoconference the AV signal (13) generated and supplied by the control unit (2).

7. An AV system as claimed in any one of claims 1 to 6, **characterized in that** the AV system is an AV system of an auditorium that produces images and/or sound to persons in the auditorium on the basis of the AV signal generated and supplied by the control unit.

8. A control unit (2) configured to generate an AV signal to be transmitted from signals produced by AV sources (5 to 10, 12) and to feed the generated AV signal (13) on, **characterized in that** the control unit includes
a memory (16) for storing information which shows areas (A to D) covered by the AV sources in a received image (4), and
an image processing apparatus (3) for processing the received image (4) to locate the user in the image and to identify the AV source that covers the area where the user is on the basis of the user location and the information stored in the memory, and
the control unit is arranged to generate the AV signal to be transmitted by utilizing the AV signal produced by the identified AV source and/or the signal of an AV source, for which the control unit receives a control impulse that indicates that the user has selected the AV source in question for use.
